# EUROPEAN PATENT SPECIFICATION

(11) **EP 3 926 182 B1**
(45) Date of publication and mention of the grant of the patent: **03.01.2024**
(21) Application number: 21179366.6
(22) Date of filing: 14.06.2021
(51) Int. Cl.: F16B 7/02, F16B 7/18, F16B 9/00, F16B 12/32, F16B 12/40, F16B 13/06

(54) **EXPANDING CONNECTION DEVICE AND MANUFACTURING METHOD**
ERWEITERNDES VERBINDUNGSGERÄT UND HERSTELLUNGSVERFAHREN
CONNECTEUR D'EXTENSION ET PROCEDE DE FABRICATION

(30) Priority: 15.06.2020 IT 202000014197
(43) Date of publication of application: 22.12.2021
(73) Proprietor: Fenix Tek Srl, 25070 Casto (BS) (IT)
(72) Inventor: FREDDI, Federico, 25070 Casto (BS) (IT)
(74) Representative: Biesse S.r.l.

(56) References cited:
- DE-A1- 2 556 981
- GB-A- 1 186 265
- GB-A- 1 515 297
- US-A- 5 765 960
- US-A1- 2017 276 158

## Description

### Field of the invention

The present invention refers in general to the field of fastening systems and relates in particular to an expanding connector for fastening elements, in particular metal tubular elements.

### State of the art

Connectors of the expansion type are known to be inserted into tubes, preferably metal tubes, for fastening them to other tubes or other elements, such as plates and bases, e.g. of pieces of furniture, such as floor lamps and the like.

These are normally deformable elements made of a plastic material, which provide a sealingly fastening, thanks to the friction generated between the connector and the inner surface of the tube. These connectors usually have a central hole for receiving and retaining a fastening element, such as a screw, which, when tensioned, causes the expansion of same connector, which therefore remains fixed to the tube.

Normally, these connectors have a main body, inside which a screw shank and a traction element, such as a pawl combined with the end portion of the screw shank, are to be inserted. When the screw is tightened, part of the pawl enters the main body, causing it to expand. Although this solution has a good seal, it is disadvantageously formed by two separate pieces. This entails a difficult re-use of the system, since once the screw has been removed, the pawl detaches and in most applications it is irretrievable. In addition, this solution is not suitable for fastening two tubes to each other, but can only be used for fastening a tube to a plate.

US 5 765 960 A discloses a connector comprising a body having a body central bore defining a body axis, one end contoured to conform to a surface of a support member, and another end shaped to coaxially abut a free end of a hollow member. An expansion element is carried by the body for close entry into the hollow member when the body and the free end abut. A drive element passes through the body central bore and has one end adapted to engage the support member, and another end engaging the expansion element, to impart a radially outward force component to the expansion element as at least a portion of the drive element is drawn toward the one end of the body. The expansion element can be in the form of resilient fingers cantilevered from the body into the hollow member, and the drive element can be a wedge member drawn by a bolt, toward the one end of the body, for urging the resilient fingers outwardly. The free ends of each finger can be formed with a tab which projects into channel. The nut is forced over the tabs into channel.

### Objects and Summary of the Invention

The present invention has been designed with the object of overcoming the drawbacks of the known art, by proposing a connection device or connector which is in a single block.

Another object is to provide a connector capable of ensuring optimal sealing.

A further object is to propose a connector which can be reused.

A still further object is to provide a connector which can be used both for fastening a tubular element to a plate and for fastening two tubular elements to each other.

A further object is to make a connector with high radial expansion, capable of compensating the dimensional tolerances of the tubular elements with which it must be combined and capable of bearing particularly high loads.

These objects are achieved with an expanding connection device, or connector, according to claim 1, which comprises a hollow main body provided with at least two longitudinal slits and a traction element incorporated in the main body and movable therein to cause a radial expansion of at least one central part of the main body and the same device, when inserted in a cavity, wherein the main body comprises a first end in which a first passage, sized so as not to allow the expansion means to pass through it, is formed.

According to the invention, therefore, the expansion means are inserted in the main body in a non-removable manner and are retained therein by the first end portion, the passage of which is sized for and has the sole purpose of allowing the insertion of pulling means, e.g. a screw, having the function of interacting with the expansion means to cause the expansion of an intermediate portion of the main body. Thereby, the expansion means constitute a single block with the main body and are not removable therefrom. The first passage is sized and made so as not to allow even the insertion of the expansion means in the main body. In fact, in order to ensure that the expansion means cannot come out of the main body when subjected to pressure, the first end of the main body must be structured in order to also prevent it from being inserted through pressure.

According to the invention, therefore, the expansion means, which for example may comprise a nut, are arranged inside the main body, unlike the devices of the known art, which provide that the expansion means are external to the main body.

Therefore, the connection device does not require any assembly operation by the user, since it is already provided with expansion means inside the main body, even in the non-use condition. Even when the pulling means are removed, the connecting device remains assembled and ready for a new use.

In addition, the connection device has a particularly high contacting surface, which ensures a better sealing.

According to the invention, the main body is made of a single piece. The term "made of a single piece" refers to a main body that does not comprise two or more parts which can be separated once they have been joined together, e.g. by interlocking connection means, screwing means or the like. On the other hand, a main body comprising initially two or more separate parts but joined together so as to be unable to be separated once they have been joined, e.g. by gluing, micro-nails, welding, or other similar techniques, can be considered a single piece.

Advantageously, then, the connector is completely retractable so as not to modify the aesthetic appearance of the element with which it is combined.

Preferably, the main body comprises an opening having an enlarged portion for housing the expansion means, an intermediate narrowing portion and an end portion having a section smaller than the section of the enlarged portion. Preferably, the narrowing portion has a side surface inclined to define a sort of funnel connecting the enlarged portion with the end portion. Even more preferably, the narrowing portion has a truncated cone or truncated pyramid shape.

Advantageously, the expansion means may be combined with pulling means, e.g. in the shape of a screw, which are apt to pull the expansion element toward and partially inside the narrowing portion which, being stressed by the expansion means, causes an expansion toward the outside of the main body. This configuration allows to increase the friction force between the connector and the cavity in which it is inserted, simply by increasing the traction exerted by the pulling means in order to compensate also possible tolerances of the cavity measure.

In a preferred solution, the connector is apt to be inserted in a tubular element to connect it to another tubular element or to a different element, such as for example a support.

Advantageously, the main body can have any section, depending on the tube with which it must be combined; for example, the connector can have a substantially circular, or square, or rectangular, or hexagonal, section.

Preferably, the main body can be made of a plastic material, preferably a polymer and even more preferably a technopolymer, whereas the expansion means and the pulling means can be made of a metal material, in particular galvanised iron, stainless steel and the like.

Advantageously, the expansion means are in the shape of a nut having two, preferably four and even more preferably six corners, to be combined with a main body having two, preferably four and even more preferably six slits, respectively, which extend at least at the enlarged portion and at the intermediate portion. Thereby, each corner of the nut can be inserted in a respective slit which thus acts as a guide to the movement of the nut, while at the same time preventing it from rotating in the main body, when pulled by the pulling means.

The present invention also concerns a method according to claim 8, for making an expanding connection device. Specifically, the method provides for constructing a first part of a main body comprising an enlarged portion, inserting an expansion element inside the enlarged portion and completing the construction of the main body having at least two longitudinal slits and a through opening and comprising a narrowing portion.

The main body comprises at least a first end, which defines a first passage having a section smaller than the external section of the expansion element and the method provides for constructing the first end and the enlarged portion, inserting the expansion means in the enlarged portion and completing the remaining part of the main body, or the method provides for constructing the whole main body except for the first end, inserting the expansion means in the enlarged portion and constructing the first end portion to complete the main body.

Preferably, the main body is made by means of additive technology, in particular by means of a 3D printer, so that it is possible to stop it after the construction of the first part in order to allow the insertion of the expansion means and then to restart it to complete the main body.

Alternatively, the main body may be constructed by mixed technology, specifically, by constructing the first part of the main body by injection or moulding technology and then, once the expansion means have been inserted, by completing the main body by means of additive technique, e.g. by means of 3D printing.

In an alternative embodiment, the two parts of the main body may be constructed as separate parts and then joined together so that they can no longer be separated, by gluing, micro-nails, welding, preferably infrasound welding, and the like.

Thanks to such a manufacturing method, the expansion means are incorporated in the main body, thus preventing them from being separated or coming out thereof.

### Brief Description of the Drawings

The invention will, however, be further depicted in the following description made with reference to the accompanying illustrative and nonlimiting drawings, wherein:

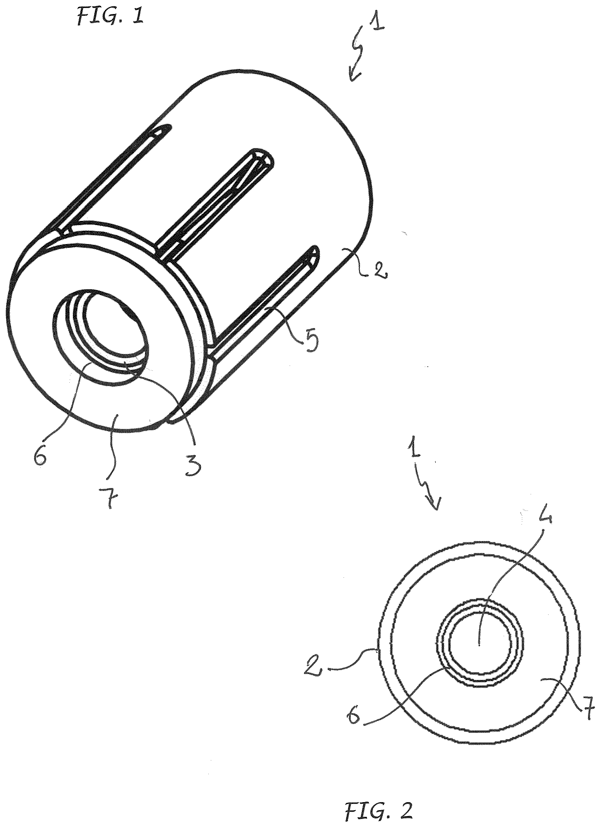

Figure 1 shows a perspective view of an embodiment of a connection device according to the present invention;
Figure 2 shows a top view of the connection device of Figure 1;
Figure 3 shows a side view of the connection device of Figure 1;
Figure 4 shows a sectional view according to the arrows A-A of the connection device of Figure 3; and
Figure 5 shows the connection device of the preceding figures in a condition of use.

### Detailed description of the Invention

In the figures, a connection device or connector, according to the present invention, is denoted by **1** as a whole.

The connection device has a hollow main body **2** and expansion means **3** arranged inside said main body.

The main body is provided with a through opening **4** and two or more peripheral grooves **5**.

The opening **4** extends centrally to the main body in a longitudinal direction **L**, starting from a first passage **6** obtained in a first end **7** of the main body, up to a second passage **8** obtained in a second end **9** of the main body.

The main body may have a substantially circular, as shown in the figures, or square, rectangular, hexagonal section or any other section corresponding to the section of an element with which it must be combined. Preferably, the main body is made of a plastic material, preferably a polymer and even more preferably a technopolymer, such as polyamide, acrylonitrile butadiene styrene (ABS), polylactide (PLA), thermoplastic polyurethane (TPU) and the like. Advantageously, in fact, the technopolymers are polymers equipped with high physical-mechanical characteristics of stiffness, toughness, ductility, machinability, resistance to high temperatures, to static and dynamic loads and to ageing.

Each groove extends in the longitudinal direction **L**. Preferably, the main body comprises at least four grooves, particularly for square- or rectangular-section tube or six grooves, particularly for circular- or hexagonal-section tube. In the event of a square- or rectangular-section tube, the main body also has a substantially square or rectangular section, respectively, and the grooves are preferably arranged at a central portion of each side surface of the main body.

In a particularly preferred variation shown in the figures, the main body comprises six grooves and is apt to house expansion means in the shape of a hexagonal nut.

Advantageously, the opening **4** has an enlarged portion **10**, near the first passage, connected to an end part **11** of the opening, having a section smaller than that of such enlarged portion, by means of an intermediate narrowing portion **12** preferably having inclined side walls, which define a substantially truncated cone or truncated pyramid intermediate portion.

The section of the first passage **6** is smaller than the section of the enlarged portion **10** and, in particular, is preferably equal to the section of the end portion **11**.

Therefore, the enlarged portion has a section greater than the section of both the first and second passages.

The enlarged portion is shaped and sized to be able to house the expansion means **3**. Preferably, the pulling means are in the shape of a nut and the like and comprise at least two, preferably at least four and even more preferably at least six corners **3'**. Advantageously, the pulling means may be a square or hexagonal nut and, correspondingly, the enlarged portion has a square or hexagonal inner section, whose corners consist of slits **5**, each of which is therefore apt to house a respective corner **3'** so as to house the nut without the possibility of rotation.

Since the first passage has a section smaller than that of the enlarged portion and therefore than that of the expansion means, they are incorporated in the main body, so as not to be able to separate therefrom. The first passage **6** is sized so as not to allow the passage of the expansion means either entering or exiting the main body **2**.

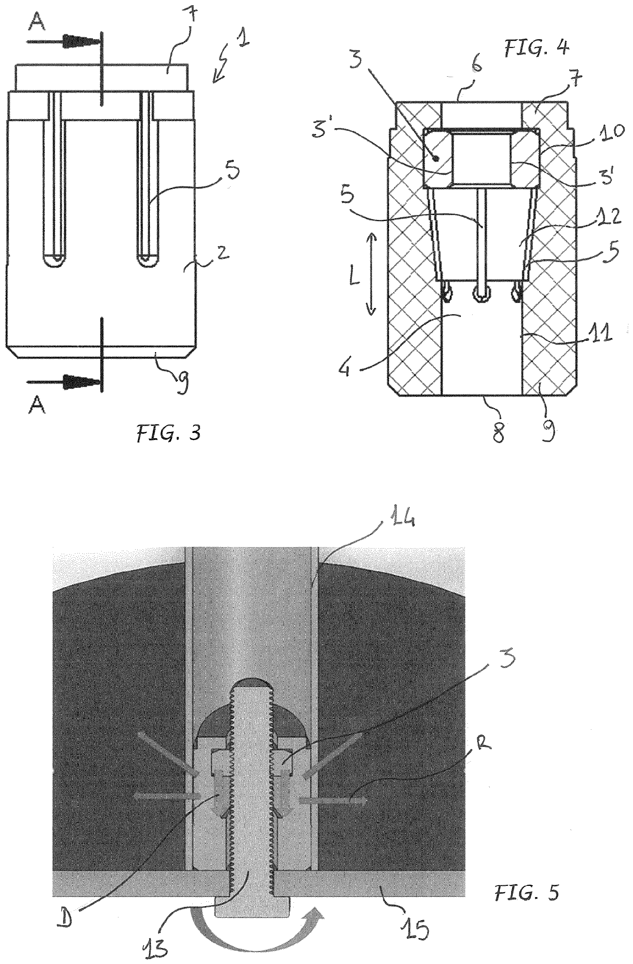

The expansion means are apt to receive and retain pulling means **13**, such as a threaded pulling screw, as shown in Figure 5. In order to ensure that the expansion means remain therein, the main body consists of a single piece and/or has no separable parts to allow the insertion/removal of the expansion means.

Preferably, the expansion means and the pulling means are made of a metal material, in particular galvanised iron, stainless steel and the like.

Therefore, the pulling means which, by acting on the expansion means, move them inside the opening of the main body, are fixed to the expansion means contained in the main body.

Figure 5 shows an example of the use of a connector according to the present invention, for fastening a tubular element **14** to a support element **15**. Once the connector has been inserted inside a cavity, in the present example inside an end of the tubular element **14**, by acting on the pulling means **13**, e.g. by screwing in the event of a screw, the expansion means are pulled in the direction **D** shown by the arrows of Figure 5, so as to enter, at least partially, the intermediate narrowing portion **12** which causes a side deformation of a portion of the main body expanding outwards, at least in the radial direction **R**, to be able to contain the expansion element which is larger than the section of the same narrowing portion. Since the corners of the expansion means are inserted in the slits, they act as a guide to the expansion means during their at least partial insertion in the enlarged portion. Consequently, the expanded part of the main body adheres to the inner surface of the tubular element, thus generating a friction that prevents the connector from detaching therefrom. The truncated cone shape of the narrowing portion, therefore, allows to vary the force exerted by the connector based on how much the pulling means are screwed.

Thanks to the characteristics described above, in particular to the configuration of a single block comprising main body and expansion means, and in the presence of at least two but preferably of at least three grooves, the present invention has the following advantages:
- the housing for the expansion means is inside the main body, thus forming a single, non-removable block;
- no user assembly operations are required; and
- the sealing remains almost unchanged even after removing the screw, thus allowing the connector to be disassembled and reassembled. In fact, the radial friction force that is generated between the main body and the inner surface of the tubular element exceeds the axial slipping force and retains the expansion element in the position taken after being tensioned.

The present invention also concerns a method for making the connection device **1**. According to this method, a first portion of the main body is made, which comprises the enlarged portion, then the expansion means are inserted in the enlarged portion and finally the remaining part of the main body is completed, so as to incorporate the expansion means in the main body.

The step of making the first portion may comprise the making of a first end **7** of the main body, which defines the first passage, and of the enlarged portion, or may provide for making the entire main body except for the first end, to be made or combined with the first portion at a later time, once the expansion means have been housed in the enlarged portion.

Preferably, the construction of the main body is carried out by means of additive technology and, specifically, by means of 3D printer, so that the expansion means can be inserted before the 3D printer completes the making of the main body.

Alternatively, it can be made by mixed technology, e.g. by making the first portion of the body by injection and by making the remaining part by additive technique.

Alternatively, the main body could initially consist of two separate pieces joined together in a way that is no longer removable, after the insertion of the expansion means, by gluing or mechanically through micro-nails, or by welding, preferably ultrasonic welding, or the like, to obtain a single body.

In the embodiments depicted and described, in order to satisfy contingent and specific requirements, a person skilled in the art may make numerous variations and modifications, within the scope of protection as defined by the following claims

## Claims

1. An expanding connection device (1) comprising a main body (2) and expansion means (3) combined with said main body, wherein the main body comprises at least two grooves (5) and wherein said expansion means are placed inside said main body and are apt to cause an expansion of a portion of the main body at least in a radial direction (R), wherein said expansion means are placed in the main body in a non-removable manner and wherein said main body is made of a single piece and comprises a first end (7) in which a first passage (6) having a continuous peripheral profile which defines an opening smaller than the external section of the expansion means is formed, so that said expansion means cannot pass through said first passage either entering or exiting the main body (2).

2. Connection device (1) according to claim 1, wherein the main body has a through opening (4) which extends in a longitudinal direction (L) between said first passage (6) and a second passage (8) obtained flush with a second end (9) opposite said first end and which comprises an enlarged portion (10) sized and shaped to receive said expansion means, an end portion (11) having a section smaller than the section of said enlarged portion and a narrowing portion (12) which connects said enlarged and end portions to each other, said narrowing portion being able to have a truncated cone or truncated pyramid section, and wherein by moving the expansion element (3) in a traction direction (T) by pulling means (13) combined with said expansion means, a partial insertion of the expansion means in the narrowing portion (12) and a consequent outward expansion of a portion of the main body are caused.

3. Connection device (1) according to one of claims 1 or 2, wherein the main body is shaped and sized to be inserted in a cavity, in particular inside a tubular element (14) to connect it to another tubular element or to a different element, such as a supporting element (15), and wherein in the working condition, the main body expands to be fixed inside said tubular element.

4. Connection device (1) according to one of the preceding claims, wherein the main body has a substantially circular or square or rectangular or hexagonal section or the like.

5. Connection device (1) according to any one of the preceding claims, wherein the main body is made of a plastic material, preferably a polymer and even more preferably a technopolymer, such as polyamide, acrylonitrile butadiene styrene, polylactide, thermoplastic polyurethane and the like.

6. Connection device (1) according to one of the preceding claims, wherein the expansion means are made of a metal material, in particular galvanised iron, stainless steel and the like.

7. Connection device (1) according to one of the preceding claims, wherein the expansion means are in the shape of a nut provided with at least two, preferably at least four and even more preferably at least six corners (3') and wherein, correspondingly, the main body comprises at least two, preferably at least four and even more preferably at least six slits (5), each extending at least at the enlarged portion and the intermediate portion and each apt to receive a respective corner of the expansion means, so as to prevent the expansion means from rotating inside the main body and to act as a guide to their movement in the main body through the pulling means (13).

8. A method for making an expanding connection device (1) comprising a main body (2) provided with a first end (7) which defines a first passage (6) having a continuous peripheral profile, at least two grooves (5), an opening comprising in turn an enlarged portion (10), an end portion (11) and a narrowing portion (12) arranged between said enlarged portion and end portion, a second end (9) and expansion means (3) placed in said main body, wherein said continuous peripheral profile defines an opening smaller than the external section of said expansion means (3), said method comprising the steps of:
a) making a first portion of said main body, comprising the enlarged portion (10);
b) inserting the expansion means in said enlarged portion; and
c) completing the remaining part of the main body, so as to retain the expansion means in the main body in an unmovable way.

9. Method according to claim 8, wherein step a) provides for making the first end with the respective first passage and for making the enlarged portion (10).

10. Method according to claim 8, wherein step a) provides for making the entire main body, except for said first end provided with said first passage to allow the positioning of the expansion means.

11. Method according to one of claims 8-10, wherein the main body is entirely made by means of additive technology, preferably by means of a 3D printer, or wherein step a) is carried out by injection and step c) by additive technique, preferably by means of a 3D printer.

## Patentansprüche

1. Spreizbare Verbindungsvorrichtung (1), die einen Hauptkörper (2) und mit dem Hauptkörper kombinierte Spreizmittel (3) umfasst, wobei der Hauptkörper mindestens zwei Nuten (5) umfasst und wobei die Spreizmittel im Inneren des Hauptkörpers angeordnet sind und geeignet sind, eine Spreizung eines Abschnitts des Hauptkörpers zumindest in einer radialen Richtung (R) zu bewirken, wobei die Spreizmittel in dem Hauptkörper auf nicht entfernbare Weise angeordnet sind und wobei der Hauptkörper einstückig ausgebildet ist und ein erstes Ende (7) aufweist, in dem ein erster Durchgang (6) mit einem kontinuierlichen Umfangsprofil ausgebildet ist, der eine Öffnung definiert, die kleiner als der äußere Querschnitt der Spreizmittel ist, so dass die Spreizmittel den ersten Durchgang weder beim Eintritt noch beim Austritt aus dem Hauptkörper (2) passieren können.

2. Verbindungsvorrichtung (1) nach Anspruch 1, wobei der Hauptkörper eine Durchgangsöffnung (4) aufweist, die sich in einer Längsrichtung (L) zwischen dem ersten Durchgang (6) und einem zweiten Durchgang (8) erstreckt, der in einer Ebene mit einem zweiten Ende (9), das dem ersten Ende gegenüberliegt, erhalten wird, und die einen erweiterten und zur Aufnahme der Spreizmittel dimensionierten und geformten Abschnitt (10), einen Endabschnitt (11) mit einem Querschnitt, der kleiner ist als der Querschnitt des erweiterten Abschnitts, und einen verjüngenden Abschnitt (12) aufweist, der den erweiterten und den Endabschnitt miteinander verbindet, wobei der verjüngende Abschnitt einen kegelstumpfförmigen oder pyramidenstumpfförmigen Querschnitt aufweisen kann, und wobei durch Bewegen des Spreizelements (3) in einer Zugrichtung (T) durch mit den Spreizmitteln kombinierte Ziehmittel (13) ein teilweises Einführen der Spreizmittel in den verjüngenden Abschnitt (12) und eine konsequente Spreizung eines Abschnitts des Hauptkörpers nach außen bewirkt werden.

3. Verbindungsvorrichtung (1) nach einem der Ansprüche 1 oder 2, wobei der Hauptkörper so geformt und bemessen ist, dass er in einen Hohlraum, insbesondere in ein rohrförmiges Element (14), eingesetzt werden kann, um es mit einem anderen rohrförmigen Element oder einem anderen Element, wie beispielsweise einem Stützelement (15), zu verbinden, und wobei sich der Hauptkörper im Betriebszustand zur Fixierung im Inneren des rohrförmigen Elements spreizt.

4. Verbindungsvorrichtung (1) nach einem der vorhergehenden Ansprüche, wobei der Hauptkörper einen im Wesentlichen kreisförmigen oder quadratischen oder rechteckigen oder sechseckigen Querschnitt oder dergleichen aufweist.

5. Verbindungsvorrichtung (1) nach einem der vorhergehenden Ansprüche, wobei der Hauptkörper aus einem Kunststoffmaterial, vorzugsweise einem Polymer und noch bevorzugter einem Technopolymer, wie Polyamid, Acrylnitril-Butadien-Styrol, Polylactid, thermoplastisches Polyurethan und dergleichen, besteht.

6. Verbindungsvorrichtung (1) nach einem der vorhergehenden Ansprüche, wobei die Spreizmittel aus einem metallischen Werkstoff, insbesondere aus verzinktem Eisen, rostfreiem Stahl und dergleichen bestehen.

7. Verbindungsvorrichtung (1) nach einem der vorhergehenden Ansprüche, wobei die Spreizmittel in Gestalt einer Mutter gebildet sind, die mit mindestens zwei, vorzugsweise mindestens vier und noch bevorzugter mindestens sechs Kanten (3') versehen ist, und wobei der Hauptkörper entsprechend mindestens zwei, vorzugsweise mindestens vier und noch bevorzugter mindestens sechs Schlitze (5) aufweist, die sich jeweils zumindest im Bereich des erweiterten Abschnitts und des Zwischenabschnitts erstrecken und jeweils geeignet sind, eine entsprechende Kante der Spreizmittel aufzunehmen, um zu verhindern, dass sich die Spreizmittel im Inneren des Hauptkörpers drehen, und um als eine Führung für ihre Bewegung im Hauptkörper durch die Ziehmittel (13) zu wirken.

8. Verfahren zur Herstellung einer spreizbaren Verbindungsvorrichtung (1), die einen Hauptkörper (2) umfasst, der mit einem ersten Ende (7) versehen ist, das einen ersten Durchgang (6) mit einem kontinuierlichen Umfangsprofil, mindestens zwei Nuten (5), eine Öffnung, die ihrerseits einen erweiterten Abschnitt (10) einen Endabschnitt (11) und einen verjüngenden Abschnitt (12), der zwischen dem erweiterten Abschnitt und dem Endabschnitt angeordnet ist, ein zweites Ende (9) und Spreizmittel (3), die in dem Hauptkörper angeordnet sind, wobei das kontinuierliche Umfangsprofil eine Öffnung definiert, die kleiner ist als der äußere Querschnitt der Spreizmittel (3), wobei das Verfahren die folgenden Schritte umfasst:
a) Erstellen eines ersten Abschnitts des Hauptkörpers, der den erweiterten Abschnitt (10) umfasst;
b) Einsetzen der Spreizmittel in den erweiterten Abschnitt; und
c) Fertigstellen des verbleibenden Teils des Hauptkörpers, so dass die Spreizmittel unbeweglich im Hauptkörper zurückgehalten werden.

9. Verfahren nach Anspruch 8, wobei Schritt a) die Herstellung des ersten Endes mit dem entsprechenden ersten Durchgang und die Herstellung des erweiterten Teils (10) vorsieht.

10. Verfahren nach Anspruch 8, wobei Schritt a) die Herstellung des gesamten Hauptkörpers mit Ausnahme des ersten Endes vorsieht, das mit dem ersten Durchgang versehen ist, um die Positionierung der Spreizmittel zu ermöglichen.

11. Verfahren nach einem der Ansprüche 8-10, wobei der Hauptkörper vollständig mittels additiver Technik, vorzugsweise mittels eines 3D-Druckers, hergestellt wird, oder wobei Schritt a) durch Spritzgießen und Schritt c) durch additive Technik, vorzugsweise mittels eines 3D-Druckers, ausgeführt wird.

## Revendications

1. Un dispositif de connexion à expansion (1) comprenant un corps principal (2) et des moyens d'expansion (3) associés audit corps principal, dans lequel le corps principal comprend au moins deux rainures (5) et dans lequel lesdits moyens d'expansion sont placés à l'intérieur dudit corps principal et sont adaptés à provoquer une expansion d'une portion du corps principal au moins dans une direction radiale (R), dans lequel lesdits moyens d'expansion sont placés dans le corps principal de manière non amovible et dans lequel ledit corps principal est réalisé en une seule pièce et comprend une première extrémité (7), dans laquelle est formé un premier passage (6) présentant un profil périphérique continue qui définit une ouverture inférieure à la section externe des moyens d'expansion, de sorte à ce que lesdits moyens d'expansion ne puissent pas passer à travers ledit premier passage ni en entrant ni en sortant du corps principal (2).

2. Dispositif de connexion (1) selon la revendication 1, dans lequel le corps principal présente une ouverture traversante (4) qui s'étend dans une direction longitudinale (L) entre ledit premier passage (6) et un second passage (8) obtenu au ras d'une seconde extrémité (9) opposée à ladite première extrémité et qui comprend une portion élargie (10) dimensionnée et conformée pour recevoir lesdits moyens d'expansion, une portion d'extrémité (11) ayant une section inférieure à la section de ladite portion élargie et une portion de rétrécissement (12) qui relie lesdites portions élargies et d'extrémité entre elles, ladite portion de rétrécissement pouvant présenter une section en cône tronqué ou en pyramide tronquée, et dans lequel, en déplaçant l'élément d'expansion (3) dans une direction de traction (T) par des moyens de traction (13) associés audits moyens d'expansion, sont causées une insertion partielle des moyens d'expansion dans la portion de rétrécissement (12) et une conséquente expansion vers l'extérieur d'une portion du corps principal.

3. Dispositif de connexion (1) selon l'une des revendications 1 ou 2, dans lequel le corps principal est conformé et dimensionné pour être inséré dans une cavité, en particulier à l'intérieur d'un élément tubulaire (14) pour le relier à un autre élément tubulaire ou à un élément différent, tel qu'un élément de support (15), et dans lequel, dans la condition de travail, le corps principal augmente de volume pour être fixé à l'intérieur dudit élément tubulaire.

4. Dispositif de connexion (1) selon l'une des revendications précédentes, dans lequel le corps principal présente une section essentiellement circulaire ou carrée ou rectangulaire ou hexagonale ou similaire.

5. Dispositif de connexion (1) selon l'une quelconque des revendications précédentes, dans lequel le corps principal est réalisé en un matériau plastique, de préférence un polymère et encore plus préférablement un technopolymère, tel que polyamide, acrylonitrile butadiène styrène, polylactide, polyuréthane thermoplastique et similaires.

6. Dispositif de connexion (1) selon l'une des revendications précédentes, dans lequel les moyens d'expansion sont réalisés d'un matériau métallique, en particulier de fer galvanisé, d'acier inoxydable et similaires.

7. Dispositif de connexion (1) selon l'une des revendications précédentes, dans lequel les moyens d'expansion sont sous la forme d'un écrou pourvu d'au moins deux, de préférence au moins quatre et encore plus préférablement d'au moins six coins (3') et dans lequel le corps principal comprend, de manière correspondante, au moins deux, de préférence au moins quatre et encore plus préférablement au moins six fentes (5), chacune s'étendant au moins en correspondance de la portion élargie et de la portion intermédiaire et chacune adaptée à recevoir un coin respectif des moyens d'expansion, de sorte à empêcher les moyens d'expansion de tourner à l'intérieur du corps principal et à servir de guide lors de leur déplacement à l'intérieur du corps principal à travers les moyens de traction (13).

8. Une méthode pour réaliser un dispositif de connexion à expansion (1) comprenant un corps principal (2) pourvu d'une première extrémité (7) définissant un premier passage (6) présentant un profil périphérique continu, au moins deux rainures (5), une ouverture comprenant à son tour une portion élargie (10), une portion d'extrémité (11) et une portion de rétrécissement (12) disposée entre ladite portion élargie et la portion d'extrémité, une second extrémité (9) et des moyens d'expansion (3) placés dans ledit corps principal, dans laquelle ledit profil périphérique continu définit une ouverture plus petite que la section externe desdits moyens d'expansion (3), ladite méthode comprenant les étapes de:
a) réaliser une première portion dudit corps principal, comprenant la portion élargie (10);
b) insérer les moyens d'expansion dans ladite portion élargie; et
c) compléter la partie restante du corps principal, de sorte à retenir les moyens d'expansion dans le corps principal de manière immobile.

9. Méthode selon la revendication 8, dans laquelle l'étape a) prévoit de réaliser la première extrémité avec le premier passage respectif et de réaliser la portion élargie (10).

10. Méthode selon la revendication 8, dans laquelle l'étape a) prévoit de réaliser la totalité du corps principal, à l'exception de ladite première extrémité pourvue dudit premier passage pour permettre le positionnement des moyens d'expansion.

11. Méthode selon l'une des revendications 8-10, dans laquelle le corps principal est entièrement réalisé au moyen d'une technologie additive, de préférence au moyen d'une imprimante 3D, ou dans lequel l'étape a) est effectuée par injection et l'étape c) par technique additive, de préférence au moyen d'une imprimante 3D.
